# EUROPEAN PATENT SPECIFICATION

(11) **EP 4 674 217 B1**
(45) Date of publication and mention of the grant of the patent: **25.11.2026**
(21) Application number: 23707933.0
(22) Date of filing: 27.02.2023
(51) Int. Cl.: H04W 74/0816

(54) **UNLICENSED CHANNEL ACCESS FOR LOW LATENCY COMMUNICATIONS**
UNLIZENZIERTER KANALZUGRIFF FÜR KOMMUNIKATION MIT NIEDRIGER LATENZ
ACCÈS À UN CANAL SANS LICENCE POUR DES COMMUNICATIONS À FAIBLE LATENCE

(43) Date of publication of application: 07.01.2026
(73) Proprietor: Fraunhofer-Gesellschaft zur Förderung der angewandten Forschung e.V., 80686 München (DE)
(72) Inventor: OLIVEIRA DA COSTA, Gustavo Wagner, 91058 Erlangen (DE); BURKHARDT, Frank, 91058 Erlangen (DE); LIPP, Stefan, 91058 Erlangen (DE)
(74) Representative: Schlenker, Julian
(86) International application number: PCT/EP2023/054842
(87) International publication number: WO 2024/179659

(56) References cited:
- WO-A1-2016/148835
- WO-A1-2022/011000
- WO-A2-2012/167193
- US-A1- 2018 310 332
- US-A1- 2019 132 103
- US-A1- 2021 251 002

## Description

Embodiments of the present application relate to the field of wireless communication, and more specifically, to those operating in unlicensed bands. Some embodiments relate to a wireless communication system that allows for low latency communications via an unlicensed channel. Some embodiments relate to unlicensed channel access for low latency communications.

In a wireless communication system, wireless ultra-reliable low latency communications (URLLC) can only work with continued access to the wireless channel. At the same time, unlicensed spectrum is very attractive for industrial applications including URLLC, because of the wide spectrum availability, ease of deployment and total cost of ownership (no license fees). Nonetheless, the channel access to unlicensed bands is regulated and spectrum etiquettes such as listen-before-talk (LBT) are mandated in certain regions and bands [1]. LBT leads to highly variable and unbounded latency, making most unlicensed bands unsuitable for URLLC.

Specifically, LBT is ultimately incompatible with URLLC. While the average latency of a Wifi network may be quite good, the latency is ultimately unbounded due to LBT. Once a transmission channel is released, the system may need to wait an arbitrarily large amount of time while other devices are transmitting. URLLC applications such as, for example, motion control cannot cope with that. URLLC applications require a transmission of data in regular intervals of, for example, 250 µs, 1 ms or 4 ms. This is a major reason why such applications are typically relying on cabled connection, but the industry has a major interest in providing wireless URLLC which would ease deployment and maintenance.

There is so far no satisfactory approach which can guarantee URLLC performance in unlicensed bands. Some of the possibilities discussed in Industry and research are:
- Usage of licensed bands - this is associated with higher costs and the available licensed band may not be enough to support all use cases or planned deployments. In comparison unlicensed bands in 5 and 6 GHz may have a total of 1700 MHz of spectrum available, while locally licensed bands below 10 GHz are restricted to 100 MHz of campus network frequencies and the frequencies associated with the mobile network operators could only be re-used as part of a commercial agreement.
- Restricting the operation to bands which do not mandate LBT. This is often discussed in Europe where the 5725 - 5875 MHz does not mandate LBT (but actually LBT is still expected to be deployed) while other bands mandate LBT. This is a large restriction of possible operation bands (150 MHz vs whole unlicensed bands) and it can lead to congestion of this band. For example multiple industrial systems may be designed to only operate in this band, hindering their co-existence in a factory deployment.
- Relying on the deployment to make sure other networks are not sharing the spectrum used by the URLLC application. This is far from robust. For example, a simple smartphone with personal hotspot enabled could accidentally disrupt a factory plant. Robustness (ultra-reliability) is a major feature of URLLC.
- Multi-channel operation with LBT operating independently on different bands - while this improves latency statistically it still cannot guarantee any latency.
- IEEE is investigating the usage of contention-free periods to enable deterministic behavior. The main drawback is that such approach works only on a single technology. Other systems or neighbor deployments can still disrupt the operation.

WO 2022/011000 A1 relates to channelization and LBT for NR unlicensed band. This may apply to NR-U from 52.6 GHz to 71 GHz and above. In an example, a method may include configuring listen before talk (LBT) bandwidth (BW) and channel occupation time (COT) sharing schemes when co-exist other radio access technology's (RAT's) channel BW for NR-U from 52.6 to 71 GHz and above; and when LBT or a resource block (RB) set BW is set to equal to each component carrier (CC) BW or transmission BW, performing LBT for each CC, primary cell (PCell), primary secondary cell (PSCell), or a scheduling secondary cell (SCell) can co-schedule LBT results for other CC.

US 2021/251002 A1 relates to unlicensed medium access without listen before talk for millimeter wave. A device determines whether one or more criteria are satisfied for accessing an unlicensed band of a shared spectrum without performing a listen-before-talk (LBT). The device transmits a communication signal in the unlicensed band without performing LBT in response to determining that the one or more criteria are satisfied.

WO 2012/167193 A2 relates to clear channel assessment at a receiving device. The receiving device determines whether it is the intended receiver for a data transmission. Upon determining it is the intended receiver, the receiving device transmits a reservation signal. Devices in the vicinity of the receiving device are configured to listen for the reservation signal and refrain from transmitting interfering signals to the receiving device based on the reservation signal.

US 2019/132103 A1 relates a method for sending a sounding reference signal. The method comprises: contending for a use permission of an unlicensed carrier according to listen-before-talk (LBT) or clear channel assessment (CCA) detection; and when the use permission of the unlicensed carrier is successfully contended, sending a sounding reference signal (SRS) on the unlicensed carrier.

US 2018/310332 A1 relates to a device for transmitting uplink in an unlicensed band. The device performs a clear channel assessment (CCA) inside a transmission window in an unlicensed band to thereby confirm whether a channel is idle. When the channel is idle, the device transmits an uplink transmission block inside the transmission window in the unlicensed band.

WO 2016/148835 A1 relates to scheduling user equipment uplink transmissions on an unlicensed carrier. A grant for transmitting physical uplink shared channel on a serving cell operating on an unlicensed carrier can be received in a subframe. A set of subframes can be determined for possible transmission of the physical uplink shared channel. Listen before talk can be performed on the unlicensed carrier to determine an earliest unoccupied subframe in the set of subframes. A physical uplink shared channel can be transmitted in multiple subframes within the set of subframes on the unlicensed carrier, starting with the earliest unoccupied subframe, in response to receiving the grant.

Therefore, there is the need for improvements or enhancements with respect to enabling low latency communications via unlicensed channels.

It is noted that the information in the above section is only for enhancing the understanding of the background of the invention and therefore it may contain information that does not form prior art and is already known to a person of ordinary skill in the art.

Embodiments of the present invention are described herein making reference to the appended drawings.
- Fig. 1: is a schematic representation of a wireless communication system comprising a first transceiver, a second transceiver and a third transceiver, according to an embodiment;
- Fig. 2: shows schematic representation of a wireless communication system comprising a first transceiver, like a base station, a second transceiver, like a user equipment, and a third transceiver, like a base station, according to an embodiment;
- Fig. 3: shows in a diagram a schematic representation of an occupancy of two channels of an unlicensed frequency band by two transceivers, so as to provide a continuous access to an unlicensed frequency band for low latency communications, in accordance with an embodiment;
- Fig. 4: shows in a diagram a schematic representation of an occupancy of two channels of an unlicensed frequency band by two transceivers, so as to provide a continuous access to an unlicensed frequency band for low latency communications, in accordance with a further embodiment;
- Fig. 5: shows in a diagram a schematic representation of an occupancy of two channels of an unlicensed frequency band by two transceivers, so as to provide a continuous access to an unlicensed frequency band for low latency communications, in accordance with a further embodiment;
- Fig. 6: shows in a diagram a schematic representation of an occupancy of two channels of an unlicensed frequency band by two transceivers, so as to provide a continuous access to an unlicensed frequency band for low latency communications, in accordance with a further embodiment;
- Fig. 7: shows in a diagram a schematic representation of an occupancy of two channels of an unlicensed frequency band by two transceivers, so as to provide a continuous access to an unlicensed frequency band for low latency communications, in accordance with a further embodiment;
- Fig. 8: shows in a diagram a schematic representation of an occupancy of two channels of an unlicensed frequency band by two transceivers, so as to provide a continuous access to an unlicensed frequency band for low latency communications, in accordance with a further embodiment;
- Fig. 9: shows in a diagram a schematic representation of an occupancy of two channels of an unlicensed frequency band by two transceivers, so as to provide a continuous access to an unlicensed frequency band for low latency communications, in accordance with a further embodiment;
- Fig. 10: shows a schematic representation of a flow chart of a communication protocol between two transceivers, according to a first embodiment;
- Fig. 11: shows a schematic representation of a flow chart of a communication protocol between two transceivers, according to a second embodiment;
- Fig. 12: shows a schematic representation of a flow chart of a communication protocol between two transceivers, according to a third embodiment; and
- Fig. 13: illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

Each unlicensed band, in each region / country has very peculiar regulations. Of particular importance (due to latency requirements) is the need to apply WiFi like Listen-before-talk (LBT).

Examples of bands where LBT is (will be) mandated are:
- Europe 5.15 GHz - 5.35 GHz
- Europe 5.47 GHz - 5.725 GHz
- Europe 6GHz
- US 6 GHz
- Japan 5 GHz

Therefore, there is the need to access the channel, compliant with LBT regulations, which yet allow a LLC/URLLC system to operate without interruption.

Embodiments of the present invention enable low latency communications in an unlicensed channel.

Specifically, embodiments allow for accessing the channel, compliant with LBT regulations, which yet allow a LLC/URLLC system to operate without interruption.

Embodiments described herein may be applied, for example, to UWIN (ultra-reliable wireless industrial network) systems, 802.11 evolution for industrial use cases, and URLLC over 5G NR-U.

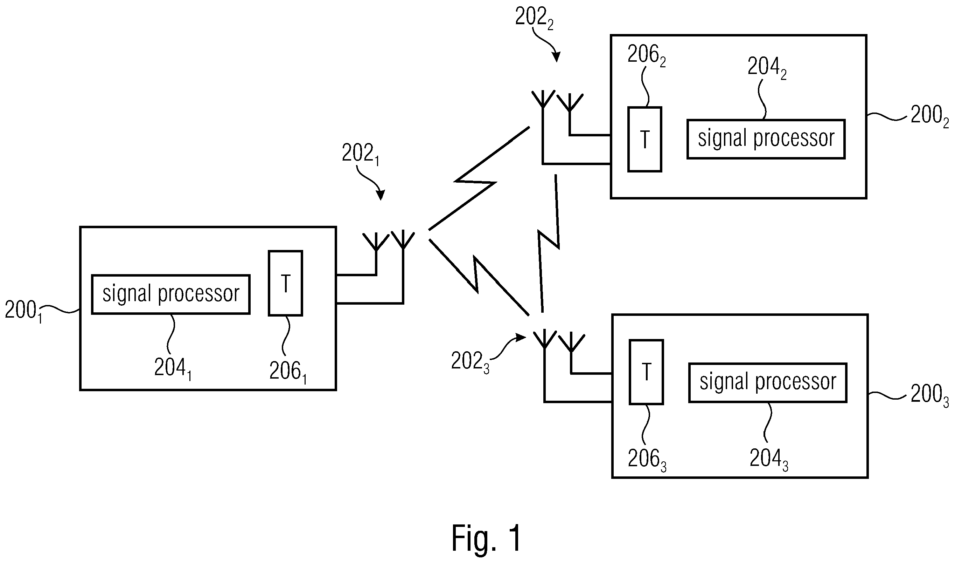

Embodiments of the present invention may be implemented in a wireless communication system including a first transceiver, a second transceiver and a third transceiver. In embodiments, each of the transceivers may be, for example, any node supporting WLAN or WiFi, such as, for example, a WiFi station or WiFi access point. In other embodiments each of the transceivers may be, for example, nodes supporting 3GPP technologies on unlicensed bands such as a UE in LAA, NR-U or SL-U, an eNB in LAA and gNB on NR-U. The transceivers may also use any combination of different base technologies, e.g. one transceiver is a NR-U gNB and another is a Wifi access point. Fig. 1 is a schematic representation of a wireless communication system comprising a first transceiver 200₁, a second transceiver 200₂ and a third transceiver 200₃. The transceivers 200₁, 200₂, 200₃ might communicate with each other via a non-licensed frequency band. Each of the transceivers 200₁, 200₂, 200₃ might include one or more antennas 202₁, 202₂, 202₃ or an antenna array having a plurality of antenna elements, a signal processor 204₁, 204₂, 204₃ and a transceiver unit 206₁, 206₂, 206₃. The transceivers 200₁, 200₂, 200₃ may operate in accordance with the inventive teachings described herein.

Embodiments provide a first transceiver of a wireless communication system, wherein the first transceiver is configured to communicate with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be acquired [or accessed] [e.g., by the wireless communication system] only after determining that the channel is free [e.g., using listen before talk or clear channel assessment], wherein the first transceiver is configured to determine whether a first channel of the at least one non-licensed frequency band is free and, when the determination results in that the first channel is free, to acquire [or access] the first channel, wherein the first transceiver is configured to maintain the first channel occupied at least until a second channel of the at least one non-licensed frequency band is successfully acquired by the second transceiver or a third transceiver of the wireless communication system [e.g., that the second channel is free [e.g., and is or will be occupied by the wireless communication system]], so as to provide a continuous access to the at least one non-licensed frequency band via different channels.

In embodiments, the first transceiver is configured to receive a first control signal from the second transceiver or the third transceiver, the first control signal indicating that the second channel of the at least one non-licensed frequency band is successfully acquired by the second transceiver or the third transceiver [e.g., that the second channel is free [e.g., and is or will be occupied by the wireless communication system], wherein the first transceiver is configured to release the first channel in response to a reception of the first control signal.

In embodiments, the first transceiver is configured to receive a first control signal from the second transceiver or the third transceiver, the first control signal indicating that an acquisition of the second channel was not successful, wherein the first transceiver is configured to continue occupying the first channel in response to a reception of the first control signal.

In embodiments, the first transceiver is configured to receive the control signal from the third transceiver using a wireless connection over a licensed frequency band or a wired connection.

In embodiments, the first transceiver is configured to receive the control signal from the second transceiver via the at least one non-licensed frequency band.

In embodiments, the first transceiver is configured to determine, while the second channel is occupied by the wireless communication system, whether a third channel of the at least one non-licensed frequency band is free and, when the determination results in that the third channel is free, to acquire the third channel.

In embodiments, the first transceiver is configured, when the determination results in that the third channel is free, to transmit a second control signal to the second transceiver or the third transceiver, the second control signal indicating that the third channel is successfully acquired by the first transceiver.

In embodiments, the first transceiver is configured, when the determination results in that the third channel is occupied, to transmit a second control signal to the second transceiver or the third transceiver, the second control signal indicating that the third channel was not successfully acquired.

In embodiments, the first transceiver is configured, when the determination results that third channel was not free, to again determine, while the second channel is occupied by the wireless communication system, whether the third channel of the at least one non-licensed frequency band is free and, when the determination results in that the third channel is free, to acquire the third channel.

In embodiments, the first transceiver is configured, when the determination results in that the third channel is free, to transmit a second control signal to the second transceiver or the third transceiver, the second control signal indicating that the third channel is successfully acquired by the first transceiver,

In embodiments, the first transceiver is configured, when the determination results in that the third channel is occupied, to transmit a second control signal to the second transceiver or the third transceiver, the second control signal indicating that the third channel was not successfully acquired.

In embodiments, the first transceiver is configured, when the determination results that third channel was not free, to again determine, while the second channel is occupied by the wireless communication system, whether a fourth channel of the at least one non-licensed frequency band is free and, when the determination results in that the fourth channel is free, to acquire the fourth channel.

In embodiments, the first transceiver is configured, when the determination results in that the fourth channel is free, to transmit a second control signal to the second transceiver or the third transceiver, the second control signal indicating that the fourth channel is successfully acquired by the first transceiver,

In embodiments, the first transceiver is configured, when the determination results in that the fourth channel is occupied, to transmit a second control signal to the second transceiver or the third transceiver, the second control signal indicating that the fourth channel was not successfully acquired.

In embodiments, the first transceiver is configured to determine in parallel, while the second channel is occupied by the wireless communication system, whether at least one out of the third channel and the fourth channel of the at least one non-licensed frequency band is free and, when the determination results in that at least one out of the third channel and the fourth channel is free, to acquire a respective free channel.

In embodiments, a second regulation constraint specifies that a channel is allowed to be occupied [e.g., by the wireless communication system] only up to a maximum allowed timespan [e.g., (maximum) channel occupancy time].

In embodiments, the first transceiver is configured to maintain the first channel occupied and to release the first channel
- at the end of the maximum allowed timespan defined by the second regulation constraint,
- or prior to the end of the maximum allowed timespan only in response to the reception of the first control signal indicating that the second channel was successfully acquired.

In embodiments, the first transceiver is configured to determine whether a channel of the at least one non-licensed frequency band is free immediately after releasing the previous channel or on a period basis with respect to a previous determination on whether a channel is free.

In embodiments, the first transceiver is configured to determine whether a channel is free using a clear channel assessment or listen before talk.

In embodiments, the first transceiver is a station [e.g., any node supporting WLAN or WiFi] or access point.

In embodiments, the third transceiver is a station [e.g., any node supporting WLAN or WiFi] or access point.

In embodiments, the second transceiver is an user equipment, or station [e.g., any node supporting WLAN or WiFi].

Further embodiments provide a second transceiver of a wireless communication system, wherein the second transceiver is configured to communicate with a first transceiver of the wireless communication system using at least one non-licensed frequency band, wherein an access to channels of the at least one non-licensed frequency band is subject to at least a first regulation constraint, wherein the first regulation constraint specifies that a channel is allowed to be accessed [e.g., by the wireless communication system] only after determining that the channel is free [e.g., using listen before talk or clear channel assessment], wherein the second transceiver is configured, while [e.g., in a timespan during which] a first channel of the at least one non-licensed frequency band is occupied by the wireless communication system, to determine whether a second channel of the at least one non-licensed frequency band is free and, when the determination results in that the second channel is free,
- to access the second channel, and
- to transmit a first control signal to a first transceiver or third transceiver of the wireless communication system, the first control signal indicating that the second channel of the at least one non-licensed frequency band is successfully acquired,
so as to provide a continuous access to the at least one non-licensed frequency band via different channels.

In embodiments, the second transceiver is configured to transmit the first control signal via the at least one non-licensed frequency band.

In embodiments, the second transceiver is configured to maintain the second channel occupied at least until a third channel of the at least one non-licensed frequency band is successfully acquired by the first transceiver or a third transceiver of the wireless communication system, so as to provide a continuous access to the at least one non-licensed frequency band via different channels.

In embodiments, the second transceiver is configured to receive a second control signal from the first transceiver or the third transceiver, the second control signal indicating that the third channel of the at least one non-licensed frequency band is successfully acquired by the first transceiver or the third transceiver [e.g., that the second channel is free [e.g., and is or will be occupied by the wireless communication system], wherein the second transceiver is configured to release the second channel in response to a reception of the second control signal.

In embodiments, the second transceiver is configured to receive a second control signal from the first transceiver or the third transceiver, the second control signal indicating that an acquisition of the third channel was not successful, wherein the second transceiver is configured to continue occupying the second channel in response to a reception of the second control signal.

In embodiments, a second regulation constraint specifies that a channel is allowed to be occupied [e.g., by the wireless communication system] only up to a maximum allowed timespan [e.g., (maximum) channel occupancy time].

In embodiments, the second transceiver is configured to maintain the third channel occupied and to release the third channel
- at the end of the maximum allowed timespan defined by the second regulation constraint,
- or prior to the end of the maximum allowed timespan only in response to the reception of the second control signal indicating that the third channel was successfully acquired.

In embodiments, the second transceiver is configured to determine whether a channel of the at least one non-licensed frequency band is free immediately after releasing the previous channel or on a period basis with respect to a previous determination on whether a channel is free.

In embodiments, the second transceiver is configured to determine whether a channel is free using a clear channel assessment or listen before talk.

In embodiments, the first transceiver is a station [e.g., any node supporting WLAN or WiFi] or access point.

In embodiments, the third transceiver is a station [e.g., any node supporting WLAN or WiFi] or access point.

In embodiments, the second transceiver is an user equipment or station [e.g., any node supporting WLAN or WiFi].

Embodiments provide a third transceiver of a wireless communication system, wherein the third transceiver is configured to communicate with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be accessed [e.g., by the wireless communication system] only after determining that the channel is free [e.g., using listen before talk or clear channel assessment], wherein the third transceiver is configured, while [e.g., in a timespan during which] a first channel of the at least one non-licensed frequency band is occupied by the wireless communication system, to determine whether a second channel of the at least one non-licensed frequency band is free and, when the determination results in that the second channel is free,
- to access the second channel, and
- to transmit a first control signal to a first transceiver of the wireless communication system, the first control signal indicating that the second channel of the at least one non-licensed frequency band is successfully acquired,
so as to provide a continuous access to the at least one non-licensed frequency band via different channels.

In embodiments, the third transceiver is configured to transmit the first control signal using a wireless connection over a licensed frequency band or a wired connection.

In embodiments, the third transceiver is configured to maintain the second channel occupied at least until a third channel of the at least one non-licensed frequency band is successfully acquired by the first transceiver or the second transceiver of the wireless communication system, so as to provide a continuous access to the at least one non-licensed frequency band via different channels.

In embodiments, the third transceiver is configured to receive a second control signal from the first transceiver or the second transceiver, the second control signal indicating that the third channel of the at least one non-licensed frequency band is successfully acquired by the first transceiver or the third transceiver [e.g., that the second channel is free [e.g., and is or will be occupied by the wireless communication system], wherein the third transceiver is configured to release the second channel in response to a reception of the second control signal.

In embodiments, the third transceiver is configured to receive a second control signal from the first transceiver or the second transceiver, the second control signal indicating that an acquisition of the third channel was not successful, wherein the third transceiver is configured to continue occupying the second channel in response to a reception of the second control signal.

In embodiments, a second regulation constraint specifies that a channel is allowed to be occupied [e.g., by the wireless communication system] only up to a maximum allowed timespan [e.g., (maximum) channel occupancy time].

In embodiments, the third transceiver is configured to maintain the second channel occupied and to release the second channel
- at the end of the maximum allowed timespan defined by the second regulation constraint,
- or prior to the end of the maximum allowed timespan only in response to the reception of the second control signal indicating that the third channel was successfully acquired.

In embodiments, the third transceiver is configured to determine whether a channel of the at least one non-licensed frequency band is free immediately after releasing the previous channel or on a period basis with respect to a previous determination on whether a channel is free.

In embodiments, the third transceiver is configured to determine whether a channel is free using a clear channel assessment or listen before talk.

In embodiments, the first transceiver is a station [e.g., any node supporting WLAN or WiFi] or access point.

In embodiments, the third transceiver is a station [e.g., any node supporting WLAN or WiFi] or access point.

In embodiments, the second transceiver is an user equipment or station [e.g., any node supporting WLAN or WiFi].

Embodiments provide a first transceiver of a wireless communication system, wherein the first transceiver is configured to communicate with a second transceiver of the wireless communication system using at least one non-licensed frequency band, wherein an access to channels of the non-licensed frequency band is subject to at least a first regulation constraint, wherein the first regulation constraint specifies that a channel is allowed to be accessed [e.g., by the wireless communication system] only after determining that the channel is free [e.g., using listen before talk or clear channel assessment], wherein the first transceiver comprises a first transceiver module and a second transceiver module, wherein the first transceiver module is configured to determine whether a first channel of the at least one non-licensed frequency band is free and, when the determination results in that the first channel is free, to access [or occupy] the first channel, wherein the second transceiver module is configured to determine [e.g., while the first channel is occupied by the wireless communication system] whether a second channel of the at least one non-licensed frequency band is free and, when the determination results in that the first channel is free,
- to access the second channel, and
- to signal to the first transceiver module that the second channel of the at least one non-licensed frequency band is successfully acquired,
wherein the first transceiver module is configured to maintain the first channel occupied at least until receiving the signaling from the second transceiver module, so as to provide a continuous access to the at least one non-licensed frequency band via different channels.

Embodiments provide a method for operating a first transceiver of a wireless communication system. The method comprises a step of communicating with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be acquired [or accessed] [e.g., by the wireless communication system] only after determining that the channel is free [e.g., using listen before talk or clear channel assessment]. Further, the method comprises a step of determining whether a first channel of the at least one non-licensed frequency band is free and, when the determination results in that the first channel is free, to acquire [or access] the first channel. Further, the method comprises a step of maintaining the first channel occupied at least until a second channel of the at least one non-licensed frequency band is successfully acquired by the second transceiver or a third transceiver of the wireless communication system [e.g., that the second channel is free [e.g., and is or will be occupied by the wireless communication system]], so as to provide a continuous access to the at least one non-licensed frequency band via different channels.

Embodiments provide a method for operating a second transceiver of a wireless communication system. The method comprises a step of communicating with a first transceiver of the wireless communication system using at least one non-licensed frequency band, wherein an access to channels of the at least one non-licensed frequency band is subject to at least a first regulation constraint, wherein the first regulation constraint specifies that a channel is allowed to be accessed [e.g., by the wireless communication system] only after determining that the channel is free [e.g., using listen before talk or clear channel assessment],
determining, while [e.g., in a timespan during which] a first channel of the at least one non-licensed frequency band is occupied by the wireless communication system, whether a second channel of the at least one non-licensed frequency band is free. Further, the method comprises a step of accessing the second channel, when the determination results in that the second channel is free. Further, the method comprises a step of transmitting a first control signal to a first transceiver or third transceiver of the wireless communication system, when the determination results in that the second channel is free, the first control signal indicating that the second channel of the at least one non-licensed frequency band is successfully acquired, so as to provide a continuous access to the at least one non-licensed frequency band via different channels.

Embodiments provide a method for operating a third transceiver of a wireless communication system. The method comprises a step of communicating with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be accessed [e.g., by the wireless communication system] only after determining that the channel is free [e.g., using listen before talk or clear channel assessment]. Further, the method comprises a step of determining, while [e.g., in a timespan during which] a first channel of the at least one non-licensed frequency band is occupied by the wireless communication system, whether a second channel of the at least one non-licensed frequency band is free and, when the determination results in that the second channel is free. Further, the method comprises a step of accessing the second channel, when the determination results in that the second channel is free. Further, the method comprises a step of transmitting a first control signal to a first transceiver of the wireless communication system, the first control signal indicating that the second channel of the at least one non-licensed frequency band is successfully acquired, so as to provide a continuous access to the at least one non-licensed frequency band via different channels.

Embodiments provide a first transceiver of a wireless communication system, wherein the first transceiver is configured to communicate with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be acquired [or accessed] [e.g., by the wireless communication system] only after determining that the channel is free [e.g., using listen before talk or clear channel assessment], wherein k channels of the at least one frequency band are occupied by the wireless communication system, wherein k is a natural number equal to or greater than one, wherein the first transceiver is configured to determine, while the k channels of the at least one frequency band are occupied by the wireless communication system, whether a k+1-th channel of the at least one non-licensed frequency band is free and, when the determination results in that the k+1-th channel is free, to acquire [or access] the k+1-th channel, wherein the first transceiver is configured to signal to a second transceiver or third transceiver of the wireless communication system that the k+1-th channel of the at least one non-licensed frequency band is successfully acquired, so as to provide a continuous access to the at least one non-licensed frequency band via different channels.

Embodiments provide a third transceiver of a wireless communication system, wherein the third transceiver is configured to communicate with a second transceiver of the wireless communication system using at least one non-licensed frequency band, wherein an access to channels of the at least one non-licensed frequency band is subject to at least a first regulation constraint, wherein the first regulation constraint specifies that a channel is allowed to be acquired [or accessed] [e.g., by the wireless communication system] only after determining that the channel is free [e.g., using listen before talk or clear channel assessment], wherein k channels of the at least one frequency band are occupied by the wireless communication system, wherein at least one channel of k channels is occupied by the third transceiver, wherein the third transceiver is configured to maintain the at least one channel occupied at least until receiving a control signal from the second or a first transceiver of the wireless communication system, the control signal indicating that a k+1-th channel is successfully acquired by the second transceiver or the third transceiver.

Embodiments described herein provide a way to implement URLLC in wireless channels that where LBT is mandated. Embodiments guarantee that there is always a channel available for transmission. Therefore, the transmission will never be interrupted, and URLLC with very low latency cycles can be achieved.

Subsequently, specific embodiments of the present invention are described in further detail.

In embodiments, a multi-channel operation is used, but with a fundamental change in the approach compared to conventional multi-channel operations. Specifically, in embodiments, a channel is released when the LBT in another channel has succeeded. In this way, embodiments conform, for example, to LBT regulations which can apply independently per channel and at the same time guarantee that the system will never be operating without a channel (or a minimal amount of channels). This continuous access to the channel is essential for URLLC operation.

In the following, embodiments are described in which it is exemplarily assumed that two (different) channels are used (for providing a continuous access to at least one non-licensed frequency band). However, it is noted that the present invention is not limited to such embodiments. Rather, in embodiments up to n channels can be used (for providing a continuous access to at least one non-licensed frequency band).

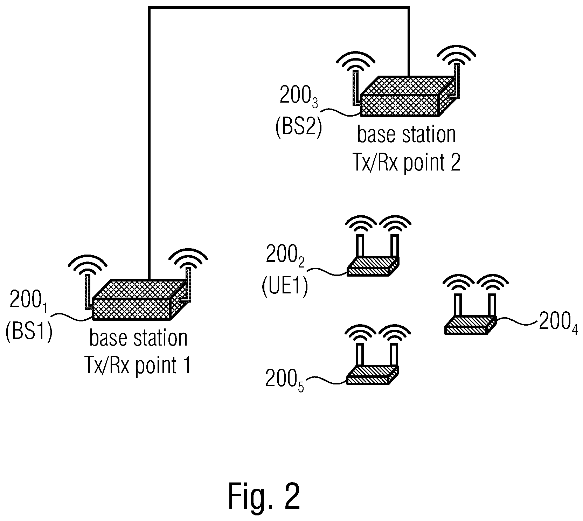

In embodiments, two transceivers may be may be co-located and communicate, for example, via a bus or the operating system. Alternatively, as exemplified Fig. 2, the two transceiver can be located in in two different transmission and receptions points, such as, for example, two base stations (BS). In this latter case, the communication can be performed via a high availability backhaul, for example, wired or using a licensed band.

In detail, Fig. 2 shows schematic representation of a wireless communication system comprising a first transceiver 200₁ (BS1), like a base station (e.g., WiFi access point), a second transceiver 200₂ (UE1), like a user equipment (e.g., WiFi station), and a third transceiver 200₃ (BS2), like a base station (e.g., WiFi access point). Naturally, the wireless communication system might comprise more than three transceivers, indicated in Fig. 2 by way of example by means of a fourth transceiver 200₄ and a fifth transceiver 200₅, which are exemplarily depicted as user equipments. In other words, Fig. 2 shows an example of a system with two transceivers, each operation on a different channel.

The advantage of having two separate Tx/Rx points as shown in Fig. 2 is manifold. First, there is hardware redundancy which may be used to achieve the high availability needed by URLLC. Second, two Tx/Rx points provide robustness against shadowing/blocking. Last, but not least, multipoint reception can be considered in uplink without violating any LBT requirement. This latter advantage will be described in more detail later. On the other hand, two co-located transceivers is a more cost-effective approach. Therefore, both approaches may be considered in accordance with embodiments.

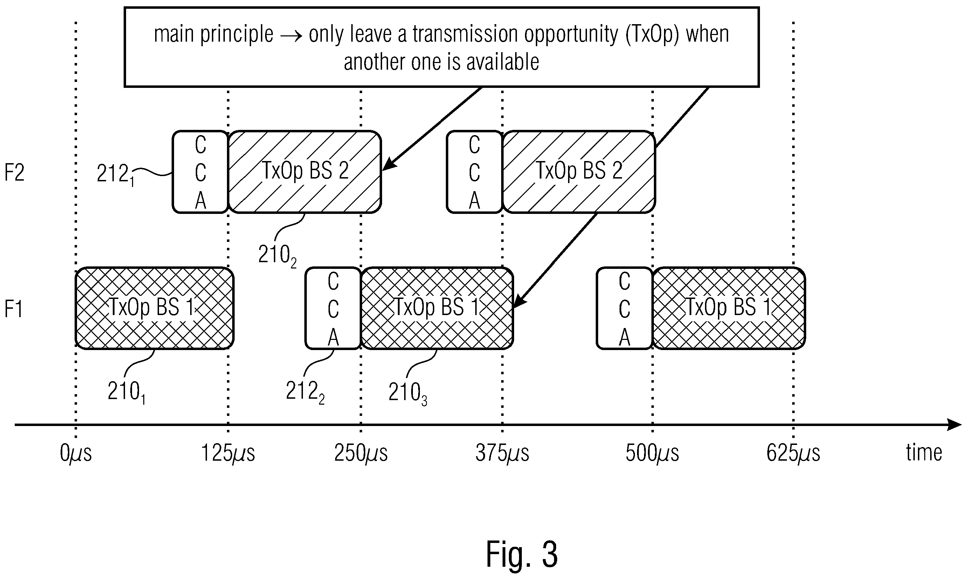

Fig. 3 shows in a diagram a schematic representation of an occupancy of two channels F1 and F2 of an unlicensed frequency band by two transceivers, so as to provide a continuous access to an unlicensed frequency band for low latency communications, in accordance with an embodiment. Thereby, the ordinate denotes the different channels of the unlicensed frequency band and the abscissa the time. As shown in Fig. 3, a first channel F1 may be occupied by a first transceiver (BS1), as indicated by reference numeral 210₁. While the first channel F1 is occupied by the first transceiver (BS1) (e.g., and taking into consideration a specific target time for channel acquisition (e.g., each 125 µs)), the third transceiver (BS2) may perform a CCA procedure 212₁ on the second channel F2 in order to acquire the second channel F2, wherein, in case that the CCA procedure 212₁ is successful (e.g., the second channel F2 is free), the third transceiver (BS2) occupies the second channel as indicated by reference numeral 210₂ and informs the first transceiver (BS1), e.g., by transmitting a respective control information, that the second channel F2 was successfully acquired. In response to the reception of the control information, the first transceiver (BS1) may release the first channel F1. Similarly, while the second channel F2 is occupied by the third transceiver (BS2) (e.g., and taking into consideration a specific target time for channel acquisition (e.g., each 125 µs)), the first transceiver (BS1) may perform a CCA procedure 212₂ on the first channel F1 in order to acquire the first channel F1, wherein, in case that the CCA procedure 212₂ is successful (e.g., the first channel F1 is free), the first transceiver (BS1) occupies the first channel as indicated by reference numeral 210₃ and informs the third transceiver (BS2), e.g., by transmitting a respective control information, that the first channel F1 was successfully acquired. In response to the reception of the control information, the third transceiver (BS2) may release the second channel F2.

In other words, Fig. 3 shows an example of two transceivers operating in separate frequencies F1 and F2, when no other system is present. As shown in Fig. 3, each transceiver only releases the channel if it can ensure the other transceiver has now acquired the respective channel. CCA is planned to start frames at regular intervals. This is referred herein to as variant A.

As illustrated in Fig. 3, each transceiver operates on a different wireless channel, e.g., a first channel F1 and a second channel F2. The two transceivers may coordinate the channel access via their separate communication channel. Thereby, Fig. 3 illustrates the case where the clear channel assessment (CCA) is always positive, that means LBT succeeded and the transceiver can acquire the channel. Note that the transceiver occupying the second channel F2 will only release the second channel F2 when the other transceiver has successfully acquired the first channel F1. The same is true the other way around (i.e., the first channel F1 is only released when the second channel F2 is acquired).

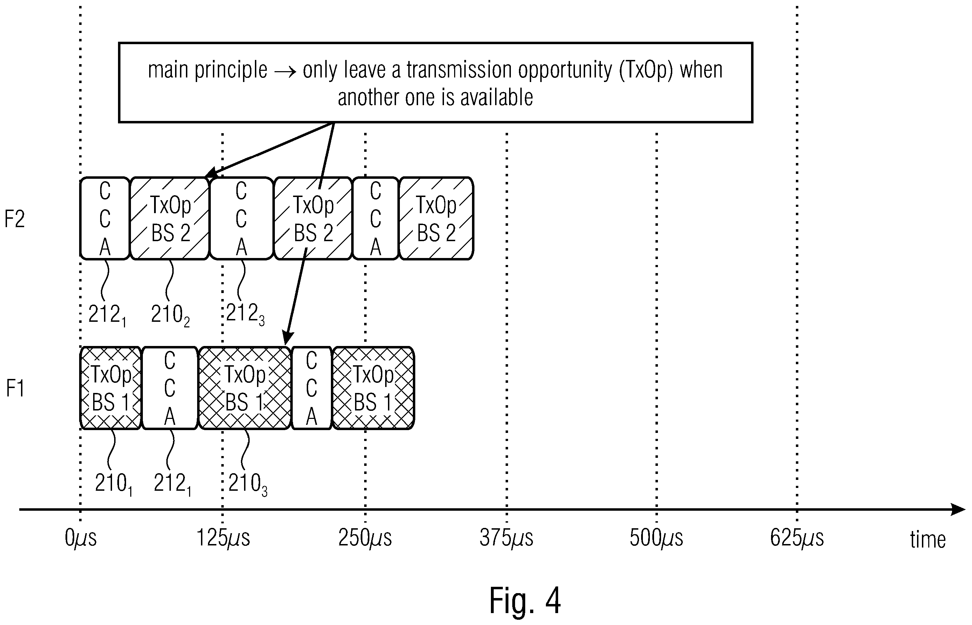

In the variant of Fig. 3, the CCA is performed with a target time for channel acquisition which provides a clear offset between the accesses of the different channels. In the given example, a channel is accessed every 125 µs. Another variant, illustrated on Fig. 4 , is to start the LBT procedure as soon as the channel was released. The principle, however, stays the same: the channel is only released when the other transceiver has acquired the other channel.

In detail, Fig. 4 shows in a diagram a schematic representation of an occupancy of two channels F1 and F2 of an unlicensed frequency band by two transceivers, so as to provide a continuous access to an unlicensed frequency band for low latency communications, in accordance with a further embodiment. Thereby, the ordinate denotes the different channels of the unlicensed frequency band and the abscissa the time. As shown in Fig. 4, a first channel F1 may be occupied by a first transceiver (BS1), as indicated by reference numeral 210₁. While the first channel F1 is occupied by the first transceiver (BS1), a third transceiver (BS2) may perform a CCA procedure 212₁ on the second channel F2 in order to acquire the second channel F2, wherein, in case that the CCA procedure 212₁ is successful (e.g., the second channel F2 is free), the third transceiver (BS2) occupies the second channel as indicated by reference numeral 210₂ and informs the first transceiver (BS1), e.g., by transmitting a respective control information, that the second channel F2 was successfully acquired. In response to the reception of the control information, the first transceiver (BS1) may release the first channel F1. Immediately after releasing the first channel F1, the first transceiver (BS1) may perform a CCA procedure 212₂ on the first channel F1 in order to again acquire the first channel F1, wherein, in case that the CCA procedure 212₂ is successful (e.g., the first channel F1 is free), the first transceiver (BS1) occupies the first channel as indicated by reference numeral 210₃ and informs the third transceiver (BS2), e.g., by transmitting a respective control information, that the first channel F1 was successfully acquired. In response to the reception of the control information, the third transceiver (BS2) may release the second channel F2 and in turn immediately perform another CCA procedure 212_3 to again acquire the second channel F2. In other words, Fig. 4 shows an operation example when no other system is present and CCA is started immediately after channel release. This is referred herein as to variant B.

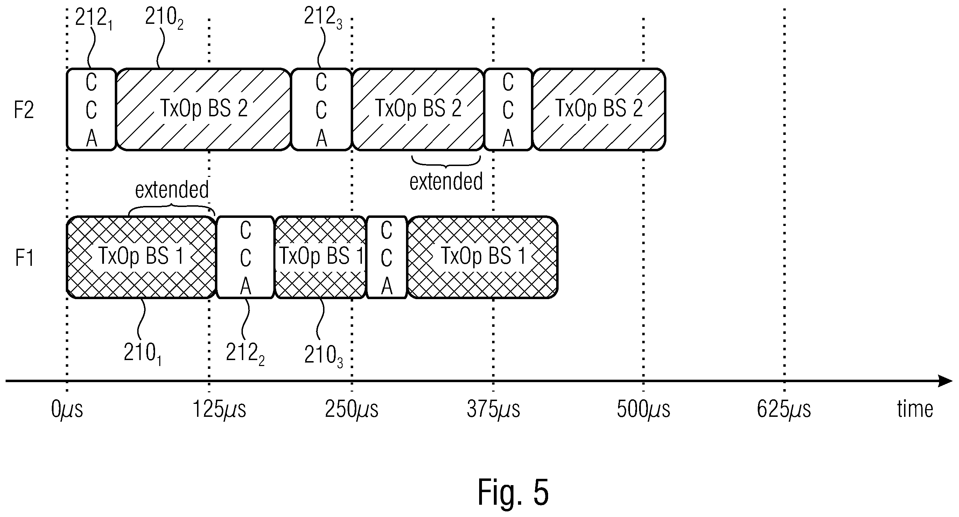

In Fig. 3 and Fig. 4, the change of operating frequency happens shortly after a CCA succeeds. Naturally, it can also be that one transceiver may need to operate a little longer to fulfill the transmission needs (e.g., depending on how much data is available for transmission) or some signaling delays. In such cases the system may operate for longer periods of both frequencies, as illustrated on Fig. 5.

In detail, Fig. 5 shows in a diagram a schematic representation of an occupancy of two channels F1 and F2 of an unlicensed frequency band by two transceivers, so as to provide a continuous access to an unlicensed frequency band for low latency communications, in accordance with a further embodiment. Compared with the embodiments shown in Figs. 3 and 4, the transceivers do not immediately release the respective channel F1 and F2 after the other channel is successfully acquired by the other transceiver, but rather the transceivers extend the occupation of the respective channel F1 and F2, as indicated in Fig. 5. In other words, in Fig. 5 the system may have longer operation using both frequencies, because of ongoing TxOps (stations expecting reception or transmission on that frequency) or signaling.

Variant A (cf. Fig. 3) allows longer gaps which could be used by other systems to transmit short frames without causing violation of any URLLC requirement. Also the regularity on Variant A can be exploited in the implementation to reduce the signaling to the served devices and in backhaul. However, Variant B (cf. Fig. 4) reduces the probability that a low priority traffic gets access to the channel. This may provide some extra protection to the URLLC system.

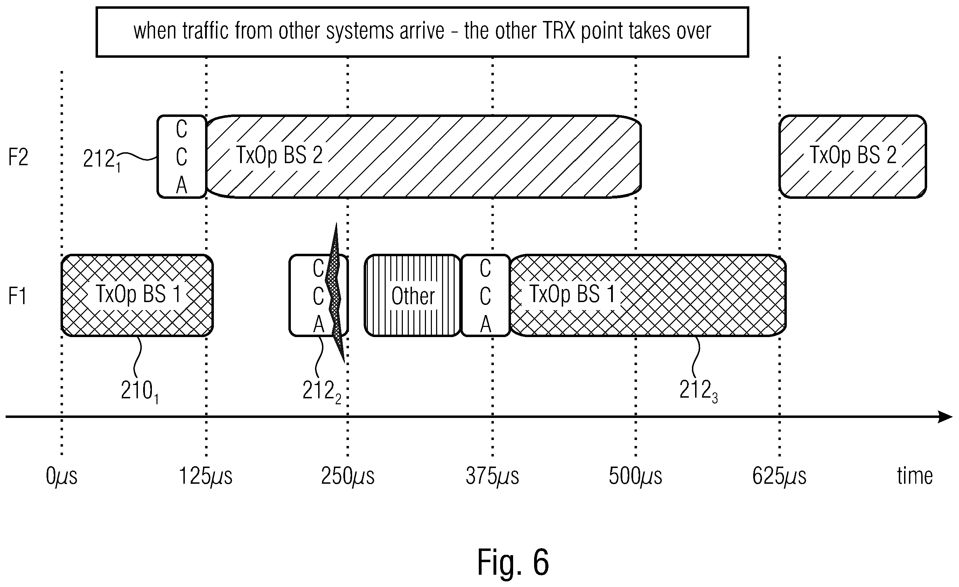

In the embodiments shown in Figs. 3, 4 and 5 it is exemplarily assumed that no other system is present. Much more interesting is what happens when other systems are present, which is the challenge to provide URLLC on unlicensed bands. Subsequently, a description and illustration for variant A (cf. Fig. 3) is provided, but the same applies to variant B (cf. Fig. 4). When the LBT procedure is initiated and the CCA fails, a transceiver cannot access the channel. In this case, the other transceiver takes over the traffic and extends the transmission opportunity until the CCA finally succeeds. This is illustrated in Fig. 6.

In detail, Fig. 6 shows in a diagram a schematic representation of an occupancy of two channels F1 and F2 of an unlicensed frequency band by two transceivers, so as to provide a continuous access to an unlicensed frequency band for low latency communications, in accordance with an embodiment. Thereby, the ordinate denotes the different channels of the unlicensed frequency band and the abscissa the time. As shown in Fig. 6, a first channel F1 may be occupied by a first transceiver (BS1), as indicated by reference numeral 210₁. While the first channel F1 is occupied by the first transceiver (BS1), the third transceiver (BS2) may perform a CCA procedure 212₁ on the second channel F2 in order to acquire the second channel F2, wherein, in case that the CCA procedure 212₁ is successful (e.g., the second channel F2 is free), the third transceiver (BS2) occupies the second channel as indicated by reference numeral 210₂ and informs the first transceiver (BS1), e.g., by transmitting a respective control information, that the second channel F2 was successfully acquired. In response to the reception of the control information, the first transceiver (BS1) may release the first channel F1. Then, while the second channel F2 is occupied by the third transceiver (BS2) (e.g., and taking into consideration a specific target time for channel acquisition (e.g., each 125 µs)), the first transceiver (BS1) may perform a CCA procedure 212₂ on the first channel F1 in order to acquire the first channel F1. Thereby, in Fig. 6 it is exemplarily assumed that the first channel F1 is occupied by another system, such that the CCA procedure 212₂ fails. In that case, the third transceiver (BS2) maintains the second channel occupied and the first transceiver (BS1) perform another CCA procedure 212₃. In case that the CCA procedure 212₃ is successful (e.g., the first channel F1 is free), the first transceiver (BS1) occupies the first channel as indicated by reference numeral 210₃ and informs the third transceiver (BS1), e.g., by transmitting a respective control information, that the first channel F1 was successfully acquired. In response to the reception of the control information, the third transceiver (BS2) may release the second channel F2. In other words, Fig. 6 shows an example of operation when CCA fails because other systems on the near vicinity are transmitting.

As becomes obvious, embodiments provide the following advantage. Even though the media is properly shared among different systems via LBT, as mandated by regulation, there is not a single point in time where the URLLC system does not have a channel available for transmission. This continuity on channel access is absolutely essential for URLLC operation.

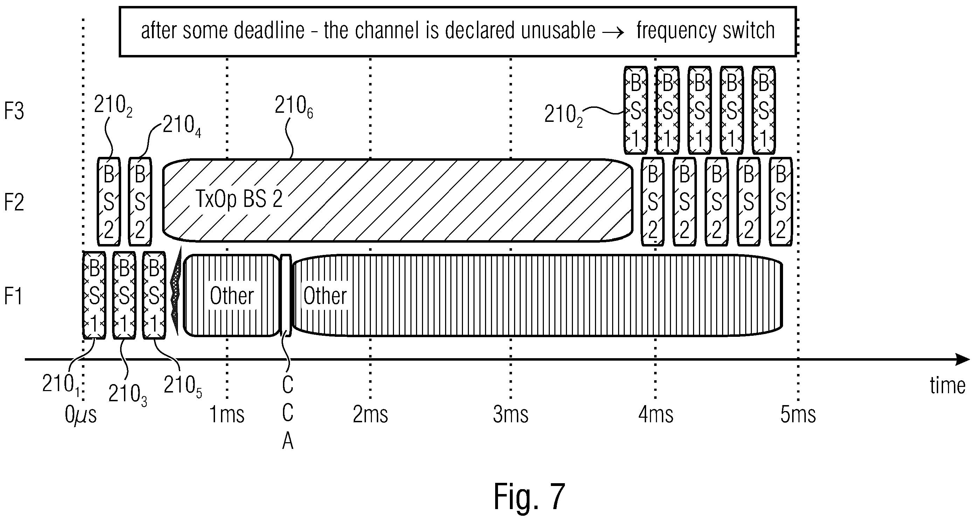

Regulation also provide a maximum time for a transmission opportunity, also known as maximum channel occupancy. This is based on access categories and may vary, e.g., from 2 ms to 10 ms. The issue, however, is that a transceiver cannot hold the channel indefinitely due to regulation restrictions. Therefore, in embodiments, the extended TxOp of Fig. 6 may combined with another mechanism to avoid violation of maximum channel occupancy time. Basically, as illustrated in Fig. 7, the CCA should only be tried for some time. After that the channel is declared unusable (in the short term), and the operating band of that transceiver is switched to another channel where the traffic is not so heavy.

Specifically, Fig. 7 shows in a diagram a schematic representation of an occupancy of two channels F1 and F2 of an unlicensed frequency band by two transceivers, so as to provide a continuous access to an unlicensed frequency band for low latency communications, in accordance with an embodiment. Thereby, the ordinate denotes the different channels of the unlicensed frequency band and the abscissa the time. Similar to the embodiment of Fig. Fig. 3, in Fig. 7 it is exemplarily assumed that the two transceivers (BS1) and (BS2) may alternately occupy a first channel F1 and a second channel F2 as indicated by reference numerals 210₁ to 210₅. However, the first transceiver (BS1) then fails to again acquire the first channel F1, so that the third transceiver (BS3) maintains the channel occupied as indicated by reference numeral 210₆. Since the first transceiver (BS1) fails to acquire the first channel F1 for a predefined time period and/or a predefined number of CCA procedures fail, the first transceiver (BS1) switches to a third channel F3. After the first transceiver successfully acquires the third channel F3 as indicated by reference numeral 210₇, the second transceiver (BS2) releases the second channel F2. Thus, as shown in Fig. 7, if there is danger in violating the maximum channel occupancy time, a transceiver shall perform a channel switch.

Naturally, a longer TxOp / channel occupancy would give the system more headroom to cope with a failed CCA and avoid changing channel too often. Typical unlicensed band regulations include different values for maximum channel occupancy, for example 2 ms, 4 ms, 6 ms and 8 ms for different access categories. Some regulations also allow to run four different LBT processes at once. Therefore, in embodiments, the traffic and LBT processes are managed to be able to hold the channel longer, when that is necessary (e.g., when the other channel CCA fails).

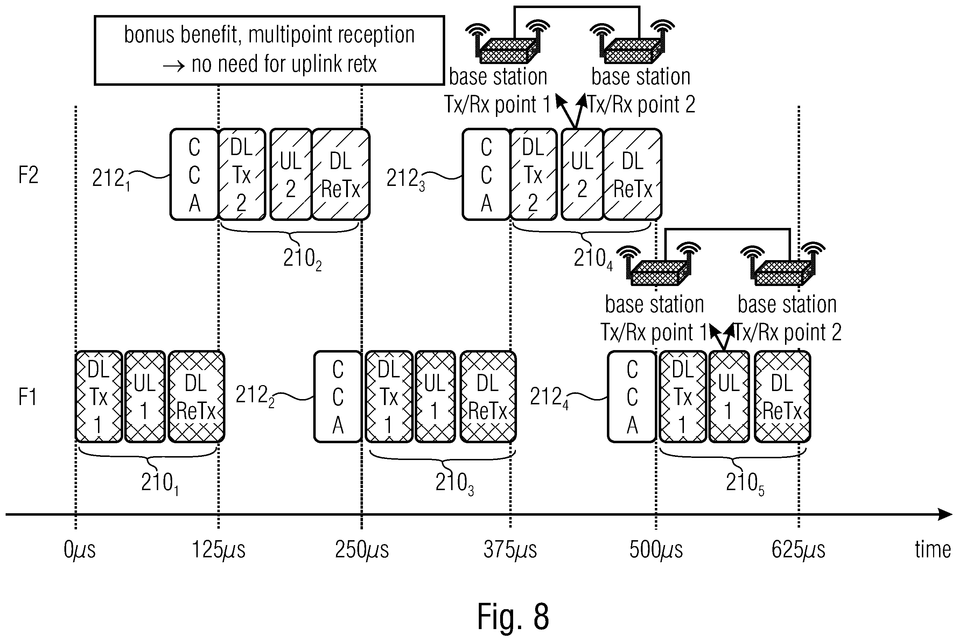

TxOps are most often shared between base stations and served devices. This can be exploited such that during uplink reception both transceivers (BSs) are tuned to the same frequency to provide uplink diversity. This is illustrated in Fig. 8. This is particularly easy to implement on Variant A, as the regular gaps can be used to plan switching from Tx to Rx both on UEs and BSs.

In detail, Fig. 8 shows in a diagram a schematic representation of an occupancy of two channels F1 and F2 of an unlicensed frequency band by two transceivers, so as to provide a continuous access to an unlicensed frequency band for low latency communications, in accordance with an embodiment. Thereby, the ordinate denotes the different channels of the unlicensed frequency band and the abscissa the time. Similar to the embodiment shown in Fig 3, the first channel F1 and the second channel F2 are alternately occupied as indicated by reference numerals 210₁ to 210₅ after respective CCA procedures 212₁ to 212₄ were successful. Thereby, as shown in Fig. 8, during the periods during which the channels F1 and F2 are occupied, uplink and downlink transmissions can be performed, wherein during uplink periods, the first transceiver (BS1) and the second transceiver (BS2) can be tuned to the same reception frequency, in order to provide uplink diversity, for example, for transmission of ta second transceiver. Thus, as shown in Fig. 8, embodiments exploit uplink diversity by tuning multiple transceivers for reception on the same frequency.

Another implementation aspect is that under low load the system may not have enough data to be transmitted, but for the sake of URLLC guarantees the channel should still be held. In that case, the system may transmit dummy data, or more usefully repetitions of the data.

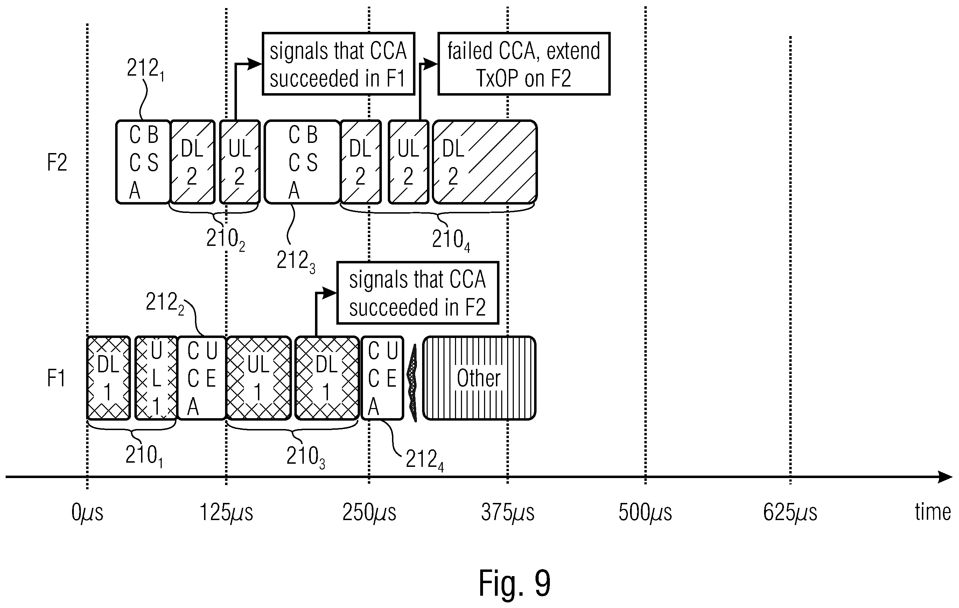

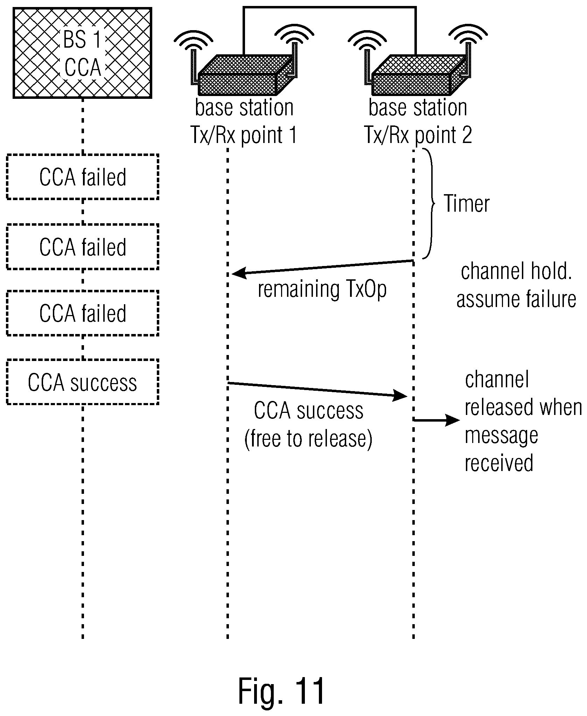

Another variant, if allowed by regulations, is to use the UE CCA instead of a second BS Tx/Rx point and once the channel is acquired sharing the TxOP back to the BS. This is illustrated in Fig. 9. In this case it is worth to do in-band signaling on the currently available band to signal wether the CCA has succeeded or not. The signaling could also be done on the new band implicitly, if the lack of signaling means CCA failed and the presence of signal indicates the channel was acquired (e.g., following the protocol of Fig. 11 described later on).

In detail, Fig. 9 shows in a diagram a schematic representation of an occupancy of two channels F1 and F2 of an unlicensed frequency band by two transceivers, so as to provide a continuous access to an unlicensed frequency band for low latency communications, in accordance with a further embodiment. Thereby, the ordinate denotes the different channels of the unlicensed frequency band and the abscissa the time. As shown in Fig. 9, a first channel F1 may be occupied by a second transceiver (UE1), as indicated by reference numeral 210₁. While the first channel F1 is occupied by the second transceiver (UE1), the third transceiver (BS2) may perform a CCA procedure 212₁ on the second channel F2 in order to acquire the second channel F2, wherein, in case that the CCA procedure 212₁ is successful (e.g., the second channel F2 is free), the third transceiver (BS2) occupies the second channel F2 as indicated by reference numeral 210₂ and informs the second transceiver (UE1), e.g., by transmitting a respective control information, that the second channel F2 was successfully acquired. In response to the reception of the control information, the second transceiver (UE1) may release the first channel F1. After releasing the first channel F1, the second transceiver (UE2) may perform a CCA procedure 212₂ on the first channel F1 in order to again acquire the first channel F1, wherein, in case that the CCA procedure 212₂ is successful (e.g., the first channel F1 is free), the second transceiver (UE1) occupies the first channel as indicated by reference numeral 210₃ and informs the third transceiver (BS2), e.g., by transmitting a respective control information, that the first channel F1 was successfully acquired. In response to the reception of the control information, the third transceiver (BS2) may release the second channel F2. After releasing the second channel F2, the third transceiver (BS2) may perform a CCA procedure 212₃ on the second channel F2 in order to again acquire the second channel F2, wherein, in case that the CCA procedure 212₃ is successful (e.g., the second channel F2 is free), the third transceiver (BS2) occupies the second channel F2 as indicated by reference numeral 210₄ and informs the second transceiver (UE1), e.g., by transmitting a respective control information, that the second channel F2 was successfully acquired. In response to the reception of the control information, the second transceiver (UE1) may release the first channel F1. After releasing the first channel F1, the second transceiver (UE1) may perform a CCA procedure 212₄ on the first channel F1 in order to again acquire the first channel F1. Thereby, in Fig. 9 it is assumed that the CCA procedure 212₄ fails (e.g., since the first channel F1 is occupied by another system), such that the third transceiver (BS2) maintains the second channel F2 occupied. Thus, in accordance with embodiments, if allowed by regulation, also regular UEs may acquire other frequency and signal to BS (which will extend TxOp or switch frequency accordingly).

For illustration purposes, in above embodiments it was exemplarily assumed that two transceivers operate in two frequencies. Thereby, it is noted that the present invention is not limited to such embodiments. Rather, in embodiments also one or more out of the following may apply:
- Multi-frequency transmission.
- Multiple transceivers and/or frequencies.
- Single transceiver.

### Multi-frequency transmission

Wireless systems often need to use more than one band for the sake of boosting capacity or reliability. In the case of URLLC using two bands or even four bands may be needed to achieve the very low target error rate. Therefore, embodiments may use multiple channels on each transmission. For example, in all illustrations F1 and F2 could mean single channels of 20 MHz, but they could also mean two channels of 20 MHz (each) or four channels of 20 MHz. The principle would still be the same, the block of frequencies F1 would only be released when the CCA for the block of frequencies F2 is successful (F2 successfully acquired).

### Multiple transceivers and frequencies

Above embodiments achieved to always acquire/occupy one out of two channels for transmission. Naturally, in embodiments it is also possible to always acquire/occupy at least K out of N channels for transmission. In this case, starting from a state where K channels are currently acquired, the system performs CCA in the non-acquired channels (e.g., either immediately after release - Variant B - or at a planned time - Variant A). If CCA succeeds K+1 channels will be available and one of the remaining channels may be released according to a certain criteria, such as for example,
- the channel which has been occupied for the longest time,
- a randomly chosen channel,
- or the channel where more traffic has been detected in the past.

If CCA on the non-acquired channel fails, than the system holds the K channels.

### Single Transceiver implementation

Currently, transceivers designed to operate in TDD bands (which is the case of unlicensed bands) can be either transmitting or receiving. As embodiments involve transmitting in one band while doing CCA in another band, in accordance with embodiments two or more transceivers are used. However, present invention is not limited to such embodiments. Rather, the present invention also can be implemented with a single transceiver that provides simultaneous transmission and reception on a single band (single band full duplex).

### Protocol for transceiver inter communication

In the case that the transceivers are on separate transmission points, such as in two base stations or, for example, on master and a slave station, there may be a need to communicate and coordinate among them. As previously described, this is a desirable deployment from the perspective of more reliability. Note also, that in light of using multiple transceivers and frequencies for communication as described above, in some embodiments more than two transceivers (e.g., BSs) may be needed.

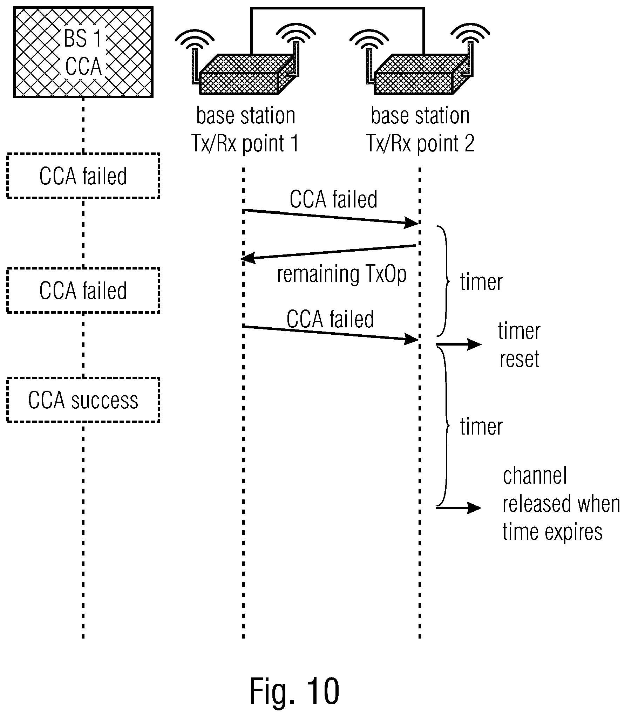

According to a first embodiment (e.g., first protocol), when CCA fails the transceiver (e.g., BS) where it failed sends a message to the other transceiver (e.g., BS). The other transceiver (e.g., BS) extends the channel access if a message arrives. The other transceiver (e.g., BS) releases the channel after a timer, assuming that the lack of a message informs the channel was now acquired. Note that this protocol might cause extension in case the backhaul message fails. This option is illustrated in Fig. 10.

In detail, Fig. 10 shows in a flow chart a schematic representation of a communication protocol between two transceivers, according to a first embodiment. As shown in Fig. 10, a transceiver (e.g.. BS) may inform another transceiver (e.g., BS) when CCA fails.

According to a second embodiment (e.g., second protocol), when CCA succeeds the transceiver (e.g., BS) where it succeeded sends a message to inform other transceiver(s) (e.g., BS(s)). The other transceiver(s) (e.g., BSs) may then release the channel. This option is illustrated in Fig. 11.

In detail, Fig. 11 shows in a flow chart a schematic representation of a communication protocol between two transceivers, according to a second embodiment. As shown in Fig. 11, a transceiver (e.g.. BS) may inform another transceiver (e.g., BS) when CCA succeeds.

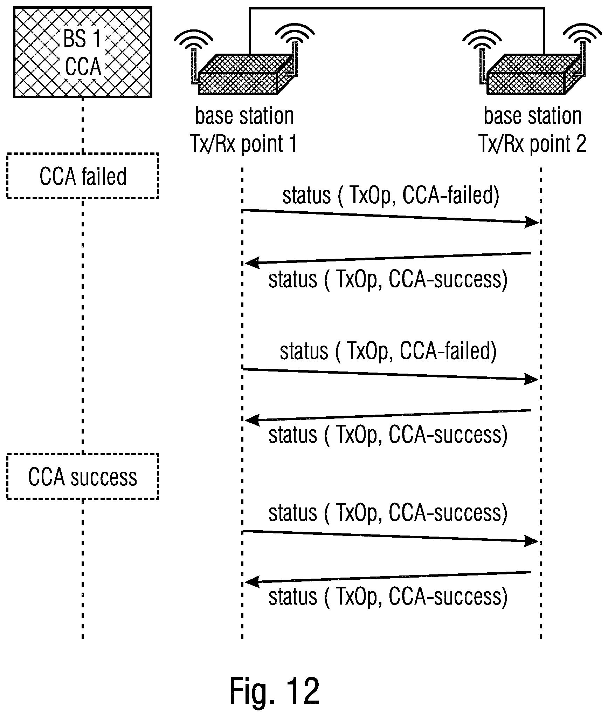

According to a third embodiment (e.g., third protocol), periodic messages may be used to inform the last CCA status, for example, periodically or in predefined periods, such as every frame. This is shown in Fig. 12.

In detail, Fig. 12 shows in a flow chart a schematic representation of a communication protocol between two transceivers, according to a third embodiment. As shown in Fig. 12, the transceivers can exchange periodic messages.

Another communication need is the transceiver (e.g., BS) which extended informing the transceiver (e.g., BS) where CCA failed the remaining TxOp time which will not violate the maximum channel occupancy. This may be needed such the transceiver (e.g., BS) with failed CCA can plan a channel switch timely. This aspect is also illustrated in the three protocol variations of Figs. 10, 11 and 12.

A potential protocol optimization - depending on further uses of the protocol fields it could be also possible to use a single value, the remaining TxOp time to encode both values. For example, TxOp = 0 is CCA failed. TxOp>0 is CCA succeeded while informing the remaining channel access time.

Another consideration is how the data which should reach UEs is sent for transmission on the other BS. The main options are to send on-demand or in-advance duplication. On-demand means that when CCA fails the traffic that should come to a BS is re-routed to other BS. This can be quite tight in terms of timing for URLLC. For that reason, it may be preferable to always duplicate the traffic to both BSs and given the CCA status of other BS select whether a transmission should be performed or not (data discarded if the other BS has acquired the channel and will perform the transmission).

### Further embodiments

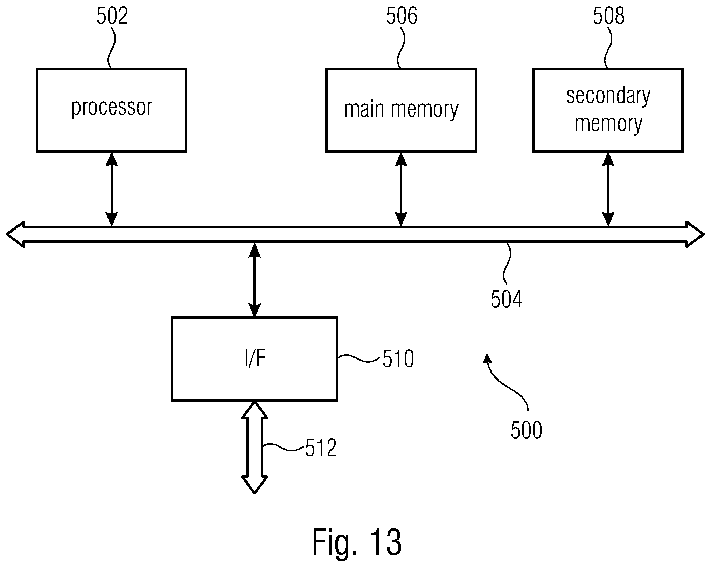

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 13 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the form of electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of References

[1] EN 301 893 v 2.1.1 (2017-5) - 5 GHz RLAN; Harmonized Standard covering the essential requirements of article 3.2 of Directive 2014/53/EU

### Abbreviations

- 3GPP: third generation partnership project
- ACK: acknowledgement
- BFD: beam failure detection
- BFR: beam failure recovery
- BRP: beam forming resource pool
- BS: base station
- CCA: clear channel assessment
- CD-SSB: cell-defining synchronization signal block
- CDM: code division multiplexing
- CG: configured grant
- CRI: CSI-RS resource indicator
- CQI: channel quality indicator
- CSI: channel state information
- CSI-RS: channel state information - reference signal
- D2D: device-to-device
- DC: dual conectivity
- DCI: downlink control information
- DL: downlink
- DM-RS: demodulation reference signal
- DRX: discontinues reception
- DTX: discontinues transmission
- eNB: evolved node B
- FR1: frequency range one
- FR2: frequency range two
- gNB: next generation node B
- HARQ: hybrid automatic repeat request
- ID: identity
- IFFT: inverse fast Fourier transform
- loT: internet of things
- LBT: listen before talk
- LTE: long-term evolution
- LAA: LTE licensed-assisted access
- MAC: medium access control
- MAC-CE: medium access control - control element
- MCG: master cell group
- MIB: master information block
- NACK: negative acknowledgement
- NCD-SSB: non cell-defining synchronization signal block
- NES: network energy saving
- NR: new radio
- NR-U: new radio-unlicensed
- OFDM: orthogonal frequency-division multiplexing
- OFDMA: orthogonal frequency-division multiple access
- PBCH: physical broadcast channel
- PC5: interface using the sidelink channel for D2D communication
- PDCCH: physical downlink control channel
- PDSCH: physical downlink shared channel
- PMI: precoding matrix indicator
- PRACH: physical random access channel
- PRS: positioning reference signal
- PSBCH: physical sidelink broadcast channel
- PSCCH: physical sidelink control channel
- PSFCH: physical sidelink feedback channel
- PSS: primary synchronization signal
- PSSCH: physical sidelink shared channel
- PUCCH: physical uplink control channel
- PUSCH: physical uplink shared channel
- QCL: quasi - colocation
- RACH: random access channel
- RAN: radio access networks
- RE: resource element
- RRC: radio resource control
- RS: reference signal
- RSRP: reference signal received power
- RSRQ: reference signal received quality
- Rx: reception
- SCI: sidelink control information
- SCG: secondary cell group
- SIB: system information block
- SL: sidelink
- SL-U: sidelink unlicensed
- SR: scheduling request
- SRS: sounding reference signal
- SSB: synchronization signal block
- SSS: secondary synchronization signal
- S-SSB: sidelink synchronization signal block
- sTTI: short transmission time interval
- TDD: time division duplex
- Tx: transmission
- TxOP: transmission opportunity
- UE: user equipment, e.g., a smartphone or loT node
- UL: uplink
- UMTS: universal mobile telecommunication system
- URLLC: ultra reliable low latency communications
- V2X: vehicle-to-everything
- V2V: vehicle-to-vehicle

## Claims

1. First transceiver (200₁) of a wireless communication system,
wherein the first transceiver (200₁) is configured to communicate with a second transceiver (200₂) of the wireless communication system using at least one non-licensed frequency band, wherein an access to channels of the at least one non-licensed frequency band is subject to at least a first regulation constraint, wherein the first regulation constraint specifies that a channel is allowed to be acquired only after determining that the channel is free,
wherein the first transceiver (200₁) is configured to determine whether a first channel of the at least one non-licensed frequency band is free and, when the determination results in that the first channel is free, to acquire the first channel,
wherein the first transceiver (200₁) is configured to maintain the first channel occupied at least until a second channel of the at least one non-licensed frequency band is successfully acquired by the second transceiver (200₂) or a third transceiver (200₃) of the wireless communication system, so as to provide a continuous access to the at least one non-licensed frequency band via different channels,
wherein the first transceiver (200₁) is configured to receive a first control signal from the second transceiver (200₂) or the third transceiver (200₃),
- the first control signal indicating that the second channel of the at least one non-licensed frequency band is successfully acquired by the second transceiver (200₂) or the third transceiver (200₃), wherein the first transceiver (200₁) is configured to release the first channel in response to the reception of the first control signal indicating that the second channel of the at least one non-licensed frequency band is successfully acquired by the second transceiver (200₂) or the third transceiver (200₃),
- or the first control signal indicating that an acquisition of the second channel was not successful, wherein the first transceiver (200₁) is configured to continue occupying the first channel in response to the reception of the first control signal indicating that an acquisition of the second channel was not successful.

2. First transceiver (200₁) according to claim 1,
wherein the first transceiver (200₁) is configured to receive the control signal from the third transceiver (200₃) using a wireless connection over a licensed frequency band or a wired connection,
or wherein the first transceiver (200₁) is configured to receive the control signal from the second transceiver via the at least one non-licensed frequency band.

3. First transceiver (200₁) according to claim 1,
wherein the first transceiver (200₁) is configured to determine, while the second channel is occupied by the wireless communication system, whether a third channel of the at least one non-licensed frequency band is free and, when the determination results in that the third channel is free, to acquire the third channel.

4. First transceiver (200₁) according to claim 3,
wherein the first transceiver (200₁) is configured, when the determination results in that the third channel is free, to transmit a second control signal to the second transceiver (200₂) or the third transceiver (200₃), the second control signal indicating that the third channel is successfully acquired by the first transceiver (200₁),
or wherein the first transceiver (200₁) is configured, when the determination results in that the third channel is occupied, to transmit a second control signal to the second transceiver (200₂) or the third transceiver (200₃), the second control signal indicating that the third channel was not successfully acquired.

5. First transceiver (200₁) according to claim 3,
wherein the first transceiver (200₁) is configured, when the determination results that third channel was not free, to again determine, while the second channel is occupied by the wireless communication system, whether the third channel of the at least one non-licensed frequency band is free and, when the determination results in that the third channel is free, to acquire the third channel.

6. First transceiver (200₁) according to claim 5,
wherein the first transceiver (200₁) is configured, when the determination results in that the third channel is free, to transmit a second control signal to the second transceiver (200₂) or the third transceiver (200₃), the second control signal indicating that the third channel is successfully acquired by the first transceiver (200₁),
or wherein the first transceiver (200₁) is configured, when the determination results in that the third channel is occupied, to transmit a second control signal to the second transceiver (200₂) or the third transceiver (200₃), the second control signal indicating that the third channel was not successfully acquired.

7. First transceiver (200₁) according to claim 3,
wherein the first transceiver (200₁) is configured, when the determination results that third channel was not free, to again determine, while the second channel is occupied by the wireless communication system, whether a fourth channel of the at least one non-licensed frequency band is free and, when the determination results in that the fourth channel is free, to acquire the fourth channel.

8. First transceiver according to claim 7,
wherein the first transceiver is configured, when the determination results in that the fourth channel is free, to transmit a second control signal to the second transceiver (200₂) or the third transceiver (200₃), the second control signal indicating that the fourth channel is successfully acquired by the first transceiver (200₁),
or wherein the first transceiver (200₁) is configured, when the determination results in that the fourth channel is occupied, to transmit a second control signal to the second transceiver (200₂) or the third transceiver (200₃), the second control signal indicating that the fourth channel was not successfully acquired.

9. First transceiver (200₁) according to claim 3,
wherein the first transceiver (200₁) is configured to determine in parallel, while the second channel is occupied by the wireless communication system, whether at least one out of the third channel and the fourth channel of the at least one non-licensed frequency band is free and, when the determination results in that at least one out of the third channel and the fourth channel is free, to acquire a respective free channel.

10. First transceiver (200₁) according to one of the claims 1 to 9,
wherein a second regulation constraint specifies that a channel is allowed to be occupied only up to a maximum allowed timespan.

11. First transceiver (200₁) according to claim 10,
wherein the first transceiver (200₁) is configured to maintain the first channel occupied and to release the first channel
- at the end of the maximum allowed timespan defined by the second regulation constraint,
- or prior to the end of the maximum allowed timespan only in response to the reception of the first control signal indicating that the second channel was successfully acquired.

12. First transceiver (200₁) according to one of the claims 1 to 11,
wherein the first transceiver (200₁) is configured to determine whether a channel of the at least one non-licensed frequency band is free immediately after releasing the previous channel or on a period basis with respect to a previous determination on whether a channel is free,
and/or wherein the first transceiver (200₁) is configured to determine whether a channel is free using a clear channel assessment or listen before talk.

13. First transceiver (200₁) according to one of the claims 1 to 12,
wherein the first transceiver is a station or access point,
and/or wherein the second transceiver (200₂) is an user equipment or station,
and/or wherein the third transceiver (200₃) is a station or access point.

14. Method for operating a first transceiver (200₁) of a wireless communication system, the method comprising:
communicating with a second transceiver (200₂) of the wireless communication system using at least one non-licensed frequency band, wherein an access to channels of the at least one non-licensed frequency band is subject to at least a first regulation constraint, wherein the first regulation constraint specifies that a channel is allowed to be acquired only after determining that the channel is free,
determining whether a first channel of the at least one non-licensed frequency band is free and, when the determination results in that the first channel is free, to acquire the first channel,
maintaining the first channel occupied at least until a second channel of the at least one non-licensed frequency band is successfully acquired by the second transceiver (200₂) or a third transceiver (200₃) of the wireless communication system, so as to provide a continuous access to the at least one non-licensed frequency band via different channels,
receiving a first control signal from the second transceiver (200₂) or the third transceiver (200₃),
- the first control signal indicating that the second channel of the at least one non-licensed frequency band is successfully acquired by the second transceiver (200₂) or the third transceiver (200₃), wherein the first channel is released in response to the reception of the first control signal indicating that the second channel of the at least one non-licensed frequency band is successfully acquired by the second transceiver (200₂) or the third transceiver (200₃),
- or the first control signal indicating that an acquisition of the second channel was not successful, wherein the first channel is maintained occupied in response to the reception of the first control signal indicating that an acquisition of the second channel was not successful.

15. A computer program executed by a first transceiver, that allows the first transceiver to perform the method of claim 14.

## Patentansprüche

1. Erstes Sende-/Empfangsgerät (200₁) eines drahtlosen Kommunikationssystems,
wobei das erste Sende-/Empfangsgerät (200₁) dazu konfiguriert ist, mit einem zweiten Sende-/Empfangsgerät (200₂) des drahtlosen Kommunikationssystems unter Verwendung zumindest eines nicht lizenzierten Frequenzbands zu kommunizieren, wobei ein Zugriff auf Kanäle des zumindest einen nicht lizenzierten Frequenzbands zumindest einer ersten Regulierungsbeschränkung unterliegt, wobei die erste Regulierungsbeschränkung spezifiziert, dass ein Kanal erst nach dem Bestimmen, dass der Kanal frei ist, erfasst werden darf,
wobei das erste Sende-/Empfangsgerät (200₁) dazu konfiguriert ist, zu bestimmen, ob ein erster Kanal des zumindest einen nicht lizenzierten Frequenzbands frei ist, und, wenn die Bestimmung ergibt, dass der erste Kanal frei ist, den ersten Kanal zu erfassen,
wobei das erste Sende-/Empfangsgerät (200₁) dazu konfiguriert ist, den ersten Kanal zumindest so lange belegt zu halten, bis ein zweiter Kanal des zumindest einen nicht lizenzierten Frequenzbands erfolgreich durch das zweite Sende-/Empfangsgerät (200₂) oder ein drittes Sende-/Empfangsgerät (200₃) des drahtlosen Kommunikationssystems erfasst wird, um einen kontinuierlichen Zugriff auf das zumindest eine nicht lizenzierte Frequenzband über verschiedene Kanäle bereitzustellen,
wobei das erste Sende-/Empfangsgerät (200₁) dazu konfiguriert ist, ein erstes Steuersignal von dem zweiten Sende-/Empfangsgerät (200₂) oder dem dritten Sende-/Empfangsgerät (200₃) zu empfangen,
- wobei das erste Steuersignal angibt, dass der zweite Kanal des zumindest einen nicht lizenzierten Frequenzbands erfolgreich durch das zweite Sende-/Empfangsgerät (200₂) oder das dritte Sende-/Empfangsgerät (200₃) erfasst wird, wobei das erste Sende-/Empfangsgerät (200₁) dazu konfiguriert ist, den ersten Kanal ansprechend auf den Empfang des ersten Steuersignals freizugeben, das angibt, dass der zweite Kanal des zumindest einen nicht lizenzierten Frequenzbands erfolgreich durch das zweite Sende-/Empfangsgerät (200₂) oder das dritte Sende-/Empfangsgerät (200₃) erfasst wird,
- oder wobei das erste Steuersignal angibt, dass eine Erfassung des zweiten Kanals nicht erfolgreich war, wobei das erste Sende-/Empfangsgerät (200₁) dazu konfiguriert ist, das Belegen des ersten Kanals ansprechend auf den Empfang des ersten Steuersignals fortzusetzen, das angibt, dass eine Erfassung des zweiten Kanals nicht erfolgreich war.

2. Erstes Sende-/Empfangsgerät (200₁) gemäß Anspruch 1,
wobei das erste Sende-/Empfangsgerät (200₁) dazu konfiguriert ist, das Steuersignal von dem dritten Sende-/Empfangsgerät (200₃) unter Verwendung einer drahtlosen Verbindung über ein lizenziertes Frequenzband oder einer Drahtverbindung zu empfangen,
oder wobei das erste Sende-/Empfangsgerät (200₁) dazu konfiguriert ist, das Steuersignal von dem zweiten Sende-/Empfangsgerät über das zumindest eine nicht lizenzierte Frequenzband zu empfangen.

3. Erstes Sende-/Empfangsgerät (200₁) gemäß Anspruch 1,
wobei das erste Sende-/Empfangsgerät (200₁) dazu konfiguriert ist, während der zweite Kanal durch das drahtlose Kommunikationssystem belegt ist, zu bestimmen, ob ein dritter Kanal des zumindest einen nicht lizenzierten Frequenzbands frei ist, und, wenn die Bestimmung ergibt, dass der dritte Kanal frei ist, den dritten Kanal zu erfassen.

4. Erstes Sende-/Empfangsgerät (200₁) gemäß Anspruch 3,
wobei das erste Sende-/Empfangsgerät (200₁) dazu konfiguriert ist, wenn die Bestimmung ergibt, dass der dritte Kanal frei ist, ein zweites Steuersignal an das zweite Sende-/Empfangsgerät (200₂) oder das dritte Sende-/Empfangsgerät (200₃) zu senden, wobei das zweite Steuersignal angibt, dass der dritte Kanal erfolgreich durch das erste Sende-/Empfangsgerät (200₁) erfasst wird,
oder wobei das erste Sende-/Empfangsgerät (200₁) dazu konfiguriert ist, wenn die Bestimmung ergibt, dass der dritte Kanal belegt ist, ein zweites Steuersignal an das zweite Sende-/Empfangsgerät (200₂) oder das dritte Sende-/Empfangsgerät (200₃) zu senden, wobei das zweite Steuersignal angibt, dass der dritte Kanal nicht erfolgreich erfasst wurde.

5. Erstes Sende-/Empfangsgerät (200₁) gemäß Anspruch 3,
wobei das erste Sende-/Empfangsgerät (200₁) dazu konfiguriert ist, wenn die Bestimmung ergibt, dass der dritte Kanal nicht frei war, während der zweite Kanal durch das drahtlose Kommunikationssystem belegt ist, erneut zu bestimmen, ob der dritte Kanal des zumindest einen nicht lizenzierten Frequenzbands frei ist, und, wenn die Bestimmung ergibt, dass der dritte Kanal frei ist, den dritten Kanal zu erfassen.

6. Erstes Sende-/Empfangsgerät (200₁) gemäß Anspruch 5,
wobei das erste Sende-/Empfangsgerät (200₁) dazu konfiguriert ist, wenn die Bestimmung ergibt, dass der dritte Kanal frei ist, ein zweites Steuersignal an das zweite Sende-/Empfangsgerät (200₂) oder das dritte Sende-/Empfangsgerät (200₃) zu senden, wobei das zweite Steuersignal angibt, dass der dritte Kanal erfolgreich durch das erste Sende-/Empfangsgerät (200₁) erfasst wird,
oder wobei das erste Sende-/Empfangsgerät (200₁) dazu konfiguriert ist, wenn die Bestimmung ergibt, dass der dritte Kanal belegt ist, ein zweites Steuersignal an das zweite Sende-/Empfangsgerät (200₂) oder das dritte Sende-/Empfangsgerät (200₃) zu senden, wobei das zweite Steuersignal angibt, dass der dritte Kanal nicht erfolgreich erfasst wurde.

7. Erstes Sende-/Empfangsgerät (200₁) gemäß Anspruch 3,
wobei das erste Sende-/Empfangsgerät (200₁) dazu konfiguriert ist, wenn die Bestimmung ergibt, dass der dritte Kanal nicht frei war, während der zweite Kanal durch das drahtlose Kommunikationssystem belegt ist, erneut zu bestimmen, ob ein vierter Kanal des zumindest einen nicht lizenzierten Frequenzbands frei ist, und, wenn die Bestimmung ergibt, dass der vierte Kanal frei ist, den vierten Kanal zu erfassen.

8. Erstes Sende-/Empfangsgerät gemäß Anspruch 7,
wobei das erste Sende-/Empfangsgerät dazu konfiguriert ist, wenn die Bestimmung ergibt, dass der vierte Kanal frei ist, ein zweites Steuersignal an das zweite Sende-/ Empfangsgerät (200₂) oder das dritte Sende-/Empfangsgerät (200₃) zu senden, wobei das zweite Steuersignal angibt, dass der vierte Kanal erfolgreich durch das erste Sende-/Empfangsgerät (200₁) erfasst wird,
oder wobei das erste Sende-/Empfangsgerät (200₁) dazu konfiguriert ist, wenn die Bestimmung ergibt, dass der vierte Kanal belegt ist, ein zweites Steuersignal an das zweite Sende-/Empfangsgerät (200₂) oder das dritte Sende-/Empfangsgerät (200₃) zu senden, wobei das zweite Steuersignal angibt, dass der vierte Kanal nicht erfolgreich erfasst wurde.

9. Erstes Sende-/Empfangsgerät (200₁) gemäß Anspruch 3,
wobei das erste Sende-/Empfangsgerät (200₁) dazu konfiguriert ist, während der zweite Kanal durch das drahtlose Kommunikationssystem belegt ist, parallel zu bestimmen, ob zumindest einer von dem dritten Kanal und dem vierten Kanal des zumindest einen nicht lizenzierten Frequenzbands frei ist, und, wenn die Bestimmung ergibt, dass zumindest einer von dem dritten Kanal und dem vierten Kanal frei ist, einen jeweiligen freien Kanal zu erfassen.

10. Erstes Sende-/Empfangsgerät (200₁) gemäß einem der Ansprüche 1 bis 9,
wobei eine zweite Regulierungsbeschränkung spezifiziert, dass ein Kanal nur bis zu einer maximal zulässigen Zeitspanne belegt werden darf.

11. Erstes Sende-/Empfangsgerät (200₁) gemäß Anspruch 10,
wobei das erste Sende-/Empfangsgerät (200₁) dazu konfiguriert ist, den ersten Kanal belegt zu halten und den ersten Kanal freizugeben
- am Ende der maximal zulässigen Zeitspanne, die durch die zweite Regulierungsbeschränkung definiert ist,
- oder vor dem Ende der maximal zulässigen Zeitspanne, nur ansprechend auf den Empfang des ersten Steuersignals, das angibt, dass der zweite Kanal erfolgreich erfasst wurde.

12. Erstes Sende-/Empfangsgerät (200₁) gemäß einem der Ansprüche 1 bis 11,
wobei das erste Sende-/Empfangsgerät (200₁) dazu konfiguriert ist, unmittelbar nach Freigabe des vorhergehenden Kanals oder auf periodischer Basis in Bezug auf eine vorhergehende Bestimmung, ob ein Kanal frei ist, zu bestimmen, ob ein Kanal des zumindest einen nicht lizenzierten Frequenzbands frei ist,
und/oder wobei das erste Sende-/Empfangsgerät (200₁) dazu konfiguriert ist, unter Verwendung einer Freikanalprüfung oder Hören vor Sprechen zu bestimmen, ob ein Kanal frei ist.

13. Erstes Sende-/Empfangsgerät (200₁) gemäß einem der Ansprüche 1 bis 12,
wobei das erste Sende-/Empfangsgerät eine Station oder ein Zugangspunkt ist,
und/oder wobei das zweite Sende-/Empfangsgerät (200₂) ein Nutzergerät oder eine Station ist,
und/oder wobei das dritte Sende-/Empfangsgerät (200₃) eine Station oder ein Zugangspunkt ist.

14. Verfahren zum Betreiben eines ersten Sende-/Empfangsgeräts (2001) eines drahtlosen Kommunikationssystems, wobei das Verfahren folgende Schritte aufweist:
Kommunizieren mit einem zweiten Sende-/Empfangsgerät (200₂) des drahtlosen Kommunikationssystems unter Verwendung zumindest eines nicht lizenzierten Frequenzbands, wobei ein Zugriff auf Kanäle des zumindest einen nicht lizenzierten Frequenzbands zumindest einer ersten Regulierungsbeschränkung unterliegt, wobei die erste Regulierungsbeschränkung spezifiziert, dass ein Kanal erst nach dem Bestimmen, dass der Kanal frei ist, erfasst werden darf,
Bestimmen, ob ein erster Kanal des zumindest einen nicht lizenzierten Frequenzbands frei ist, und, wenn die Bestimmung ergibt, dass der erste Kanal frei ist, Erfassen des ersten Kanals,
Belegt-Halten des ersten Kanals zumindest so lange, bis ein zweiter Kanal des zumindest einen nicht lizenzierten Frequenzbands erfolgreich durch das zweite Sende-/Empfangsgerät (200₂) oder ein drittes Sende-/Empfangsgerät (200₃) des drahtlosen Kommunikationssystems erfasst wird, um einen kontinuierlichen Zugriff auf das zumindest eine nicht lizenzierte Frequenzband über verschiedene Kanäle bereitzustellen,
Empfangen eines ersten Steuersignals von dem zweiten Sende-/Empfangsgerät (200₂) oder dem dritten Sende-/Empfangsgerät (200₃),
- wobei das erste Steuersignal angibt, dass der zweite Kanal des zumindest einen nicht lizenzierten Frequenzbands erfolgreich durch das zweite Sende-/Empfangsgerät (200₂) oder das dritte Sende-/Empfangsgerät (200₃) erfasst wird, wobei der erste Kanal ansprechend auf den Empfang des ersten Steuersignals freigegeben wird, das angibt, dass der zweite Kanal des zumindest einen nicht lizenzierten Frequenzbands erfolgreich durch das zweite Sende-/Empfangsgerät (200₂) oder das dritte Sende-/Empfangsgerät (200₃) erfasst wird,
- oder wobei das erste Steuersignal angibt, dass eine Erfassung des zweiten Kanals nicht erfolgreich war, wobei der erste Kanal ansprechend auf den Empfang des ersten Steuersignals belegt gehalten wird, das angibt, dass eine Erfassung des zweiten Kanals nicht erfolgreich war.

15. Computerprogramm, das durch ein erstes Sende-/Empfangsgerät ausgeführt wird und das es dem ersten Sende-/Empfangsgerät ermöglicht, das Verfahren gemäß Anspruch 14 durchzuführen.

## Revendications

1. Premier émetteur-récepteur (200₁) d'un système de communication sans fil,
dans lequel le premier émetteur-récepteur (200₁) est configuré pour communiquer avec un deuxième émetteur-récepteur (200₂) du système de communication sans fil en utilisant au moins une bande de fréquences sans licence, dans lequel un accès aux canaux de l'au moins une bande de fréquences sans licence est soumis à au moins une première contrainte réglementaire, dans lequel la première contrainte réglementaire spécifie qu'un canal ne peut être acquis uniquement après la détermination que le canal est libre,
dans lequel le premier émetteur-récepteur (200₁) est configuré pour déterminer si un premier canal de l'au moins une bande de fréquences sans licence est libre et, lorsque la détermination conclut que le premier canal est libre, d'acquérir le premier canal,
dans lequel le premier émetteur-récepteur (200₁) est configuré pour maintenir le premier canal occupé au moins jusqu'à ce qu'un deuxième canal de l'au moins une bande de fréquences sans licence soit acquis avec succès par le deuxième émetteur-récepteur (200₂) ou un troisième émetteur-récepteur (200₃) du système de communication sans fil, de sorte à fournir un accès continu à l'au moins une bande de fréquences sans licence à travers différents canaux,
dans lequel le premier émetteur-récepteur (200₁) est configuré pour recevoir un premier signal de commande depuis le deuxième émetteur-récepteur (200₂) ou le troisième émetteur-récepteur (200₃),
- le premier signal de commande indiquant que le deuxième canal de l'au moins une bande de fréquences sans licence est acquis avec succès par le deuxième émetteur-récepteur (200₂) ou le troisième émetteur-récepteur (200₃), dans lequel le premier émetteur-récepteur (200₁) est configuré pour libérer le premier canal en réponse à la réception du premier signal de commande indiquant que le deuxième canal de l'au moins une bande de fréquences sans licence est acquis avec succès par le deuxième émetteur-récepteur (200₂) ou le troisième émetteur-récepteur (200₃),
- ou le premier signal de commande indiquant qu'une acquisition du deuxième canal a échoué, dans lequel le premier émetteur-récepteur (200₁) est configuré pour continuer à occuper le premier canal en réponse à la réception du premier signal de commande indiquant qu'une acquisition du deuxième canal a échoué.

2. Premier émetteur-récepteur (200₁) selon la revendication 1,
dans lequel le premier émetteur-récepteur (200₁) est configuré pour recevoir le signal de commande depuis le troisième émetteur-récepteur (200₃) en utilisant une connexion sans fil sur une bande de fréquences sous licence ou à travers une connexion filaire,
ou dans lequel le premier émetteur-récepteur (200₁) est configuré pour recevoir le signal de commande depuis le deuxième émetteur-récepteur à travers l'au moins une bande de fréquences sans licence.

3. Premier émetteur-récepteur (200₁) selon la revendication 1,
dans lequel le premier émetteur-récepteur (200₁) est configuré pour déterminer, alors que le deuxième canal est occupé par le système de communication sans fil, si un troisième canal de l'au moins une bande de fréquences sans licence est libre et, lorsque la détermination conclut que le troisième canal est libre, pour acquérir le troisième canal.

4. Premier émetteur-récepteur (200₁) selon la revendication 3,
dans lequel le premier émetteur-récepteur (200₁) est configuré, lorsque la détermination conclut que le troisième canal est libre, pour transmettre un deuxième signal de commande au deuxième émetteur-récepteur (200₂) ou au troisième émetteur-récepteur (200₃), le deuxième signal de commande indiquant que le troisième canal est acquis avec succès par le premier émetteur-récepteur (200₁),
ou dans lequel le premier émetteur-récepteur (200₁) est configuré, lorsque la détermination conclut que le troisième canal est occupé, pour transmettre un deuxième signal de commande au deuxième émetteur-récepteur (200₂) ou au troisième émetteur-récepteur (200₃), le deuxième signal de commande indiquant que le troisième canal n'a pas pu être acquis avec succès.

5. Premier émetteur-récepteur (200₁) selon la revendication 3,
dans lequel le premier émetteur-récepteur (200₁) est configuré, lorsque la détermination conclut que le troisième canal n'est pas libre, pour déterminer encore une fois, alors que le deuxième canal est occupé par le système de communication sans fil, si le troisième canal de l'au moins une bande de fréquences sans licence est libre et, lorsque la détermination conclut que le troisième canal est libre, pour acquérir le troisième canal.

6. Premier émetteur-récepteur (200₁) selon la revendication 5,
dans lequel le premier émetteur-récepteur (200₁) est configuré, lorsque la détermination conclut que le troisième canal est libre, pour transmettre un deuxième signal de commande au deuxième émetteur-récepteur (200₂) ou au troisième émetteur-récepteur (200₃), le deuxième signal de commande indiquant que le troisième canal est acquis avec succès par le premier émetteur-récepteur (200₁),
ou dans lequel le premier émetteur-récepteur (200₁) est configuré, lorsque la détermination conclut que le troisième canal est occupé, pour transmettre un deuxième signal de commande au deuxième émetteur-récepteur (200₂) ou au troisième émetteur-récepteur (200₃), le deuxième signal de commande indiquant que le troisième canal n'a pas pu être acquis avec succès.

7. Premier émetteur-récepteur (200₁) selon la revendication 3,
dans lequel le premier émetteur-récepteur (200₁) est configuré, lorsque la détermination conclut que le troisième canal n'était pas libre, pour déterminer encore une fois, alors que le deuxième canal est occupé par le système de communication sans fil, si un quatrième canal de l'au moins une bande de fréquences sans licence est libre et, lorsque la détermination conclut que le quatrième canal est libre, pour acquérir le quatrième canal.

8. Premier émetteur-récepteur selon la revendication 7,
dans lequel le premier émetteur-récepteur est configuré, lorsque la détermination conclut que le quatrième canal est libre, pour transmettre un deuxième signal de commande au deuxième émetteur-récepteur (200₂) ou au troisième émetteur-récepteur (200₃), le deuxième signal de commande indiquant que le quatrième canal est acquis avec succès par le premier émetteur-récepteur (200₁),
ou dans lequel le premier émetteur-récepteur (200₁) est configuré, lorsque la détermination conclut que le quatrième canal est occupé, pour transmettre un deuxième signal de commande au deuxième émetteur-récepteur (200₂) ou au troisième émetteur-récepteur (200₃), le deuxième signal de commande indiquant que le quatrième canal n'a pas pu être acquis avec succès.

9. Premier émetteur-récepteur (200₁) selon la revendication 3,
dans lequel le premier émetteur-récepteur (200₁) est configuré pour déterminer en parallèle, alors que le deuxième canal est occupé par le système de communication sans fil, si au moins un parmi le troisième canal et le quatrième canal de l'au moins une bande de fréquences sans licence est libre et, lorsque la détermination conclut qu'au moins un parmi le troisième canal et le quatrième canal est libre, pour acquérir un canal libre respectif.

10. Premier émetteur-récepteur (200₁) selon l'une des revendications 1 à 9,
dans lequel une deuxième contrainte réglementaire spécifie qu'il est permis d'occuper un canal uniquement pendant une durée maximale autorisée.

11. Premier émetteur-récepteur (200₁) selon la revendication 10,
dans lequel le premier émetteur-récepteur (200₁) est configuré pour maintenir le premier canal occupé et pour libérer le premier canal
- à la fin de la durée maximale autorisée définie par la deuxième contrainte réglementaire,
- ou avant l'expiration de la durée maximale autorisée, uniquement en réponse à la réception du premier signal de commande indiquant que le deuxième canal a été acquis avec succès.

12. Premier émetteur-récepteur (200₁) selon l'une des revendications 1 à 11,
dans lequel le premier émetteur-récepteur (200₁) est configuré pour déterminer si un canal de l'au moins une bande de fréquences sans licence est libre immédiatement après la libération du canal précédent ou de manière périodique par rapport à une détermination antérieure si un canal est libre,
et/ou dans lequel le premier émetteur-récepteur (200₁) est configuré pour déterminer si un canal est libre en utilisant une évaluation de canal libre ou d'un mécanisme d'écoute avant émission.

13. Premier émetteur-récepteur (200₁) selon l'une des revendications 1 à 12,
dans lequel le premier émetteur-récepteur est une station ou un point d'accès,
et/ou dans lequel le deuxième émetteur-récepteur (200₂) est un équipement utilisateur ou une station,
et/ou dans lequel le troisième émetteur-récepteur (200₃) est une station ou un point d'accès.

14. Procédé de fonctionnement d'un premier émetteur-récepteur (200₁) d'un système de communication sans fil, le procédé comprenant :
la communication avec un deuxième émetteur-récepteur (200₂) du système de communication sans fil en utilisant au moins une bande de fréquences sans licence, dans lequel un accès aux canaux de l'au moins une bande de fréquences sans licence est soumis à au moins une première contrainte réglementaire, dans lequel la première contrainte réglementaire spécifie qu'un canal ne peut être acquis uniquement après la détermination que le canal est libre,
la détermination si un premier canal de l'au moins une bande de fréquences sans licence est libre et, lorsque la détermination conclut que le premier canal est libre, l'acquisition du premier canal,
le maintien du premier canal occupé au moins jusqu'à ce qu'un deuxième canal de l'au moins une bande de fréquences sans licence soit acquis avec succès par le deuxième émetteur-récepteur (200₂) ou un troisième émetteur-récepteur (200₃) du système de communication sans fil, de sorte à fournir un accès continu à l'au moins une bande de fréquences sans licence à travers différents canaux,
la réception d'un premier signal de commande depuis le deuxième émetteur-récepteur (200₂) ou le troisième émetteur-récepteur (200₃),
- le premier signal de commande indiquant que le deuxième canal de l'au moins une bande de fréquences sans licence est acquis avec succès par le deuxième émetteur-récepteur (200₂) ou le troisième émetteur-récepteur (200₃), dans lequel le premier canal est libéré en réponse à la réception du premier signal de commande indiquant que le deuxième canal de l'au moins une bande de fréquences sans licence est acquis avec succès par le deuxième émetteur-récepteur (200₂) ou le troisième émetteur-récepteur (200₃),
- ou le premier signal de commande indiquant qu'une acquisition du deuxième canal a échoué, dans lequel le premier canal est maintenu dans un état occupé en réponse à la réception du premier signal de commande indiquant qu'une acquisition du deuxième canal a échoué.

15. Programme informatique exécuté par un premier émetteur-récepteur, qui permet au premier émetteur-récepteur de mettre en œuvre le procédé selon la revendication 14.
